# EUROPEAN PATENT APPLICATION

(11) **EP 4 730 678 A1**
(43) Date of publication of application: **22.04.2026**
(21) Application number: 24842233.9
(22) Date of filing: 08.07.2024
(51) Int. Cl.: H04L 1/00

(54) **COMMUNICATION METHOD AND COMMUNICATION APPARATUS**

(30) Priority: 14.07.2023 CN 202310870499
(71) Applicant: Huawei Technologies Co., Ltd., Shenzhen, Guangdong 518129 (CN)
(72) Inventor: HU, Mengshi, Shenzhen, Guangdong 518129 (CN); YU, Jian, Shenzhen, Guangdong 518129 (CN); GONG, Bo, Shenzhen, Guangdong 518129 (CN); GAN, Ming, Shenzhen, Guangdong 518129 (CN)
(74) Representative: Körber, Martin Hans
(86) International application number: PCT/CN2024/104178
(87) International publication number: WO 2025/016238

(57) **Abstract**

This application provides a communication method and a communication apparatus. The method provides a solution that can further improve spectral efficiency of data transmission. The method includes: A first device generates first data (for example, the first data may be a physical layer protocol data unit or a part of data of a physical layer protocol data unit), and sends the first data to a second device on a resource unit, where the resource unit corresponds to or uses at least two different modulation and coding schemes. The resource unit may be any one of a 26-tone resource unit, a 52-tone resource unit, a 106-tone resource unit, a 242-tone resource unit, a 484-tone resource unit, and a 996-tone resource unit. The resource unit can use the at least two different modulation and coding schemes for data transmission in one transmission process, so that spectral efficiency of data transmission can be further improved.

## Description

This application claims priority to Chinese Patent Application No. 202310870499.0, filed with the China National Intellectual Property Administration on July 14, 2023 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

A wireless local area network (wireless local area network, WLAN) has evolved through many generations, including low-frequency communication standards, such as 802.11a/b/g, 802.11n, 802.11ac, 802.11ax, 802.11be, and 802.11bn that operate below 7 GHz, and further including high-frequency communication standards, such as 802.11ad and 802.11ay that operate near 60 GHz.

In WLAN communication, transmission of data (for example, the data may be a physical layer protocol data unit (physical layer protocol data unit, PPDU)) may be performed between a transmit device and a receive device by using a fixed modulation and coding scheme (modulation and coding scheme, MCS) within a specific bandwidth, resulting in limited spectral efficiency of data transmission. Therefore, how to further improve spectral efficiency of data transmission is a pressing technical problem that needs to be resolved.

### SUMMARY

This application provides a communication method and a communication apparatus, to further improve spectral efficiency of data transmission.

According to a first aspect, a communication method is provided. The method includes: generating first data; and sending the first data on an RU, where the RU corresponds to at least two different MCSs.

The solution in the first aspect may be performed by a first device, or may be performed by a chip, an integrated circuit, or the like configured to perform a function of the first device. For ease of description, the following uses the first device as an example for description.

Specifically, the RU may be any one of a 26-tone RU, a 52-tone RU, a 106-tone RU, a 242-tone RU, a 484-tone RU, and a 996-tone RU. The RU may belong to a first bandwidth (or the RU is a basic RU of the first bandwidth). For example, when the first bandwidth includes a plurality of RUs, the RU is any one of the plurality of RUs. For another example, when the first bandwidth includes a multi-RU (multi-RU, MRU), the RU is an RU used to form the MRU.

In addition, the first data may be a PPDU or a part of data of a PPDU. To be specific, the first device sends the PPDU or the part of data of the PPDU on the RU in a bandwidth. Whether there may be other data (which may be on a same RU or on another RU, and this is not limited) that is transmitted together with the first data in the bandwidth in one transmission process is not limited in embodiments of this application.

That the RU corresponds to at least two different MCSs may indicate that the RU may perform data transmission by using the at least two different MCSs in one transmission process. The RU uses the at least two different MCSs, so that the RU can perform data transmission based on the at least two different MCSs in one transmission process. Compared with an existing solution in which one RU uses one MCS, the foregoing solution can support further improvement on spectral efficiency of data transmission.

Specifically, subcarriers in the RU may select appropriate MCSs based on conditions such as channels, interference, and noise corresponding to the subcarriers. In comparison with a solution in which a same RU corresponds to one MCS, a solution in which a same RU corresponds to at least two different MCSs helps select MCSs more flexibly. In addition, a higher-order MCS has a higher modulation order or a higher code rate than a lower-order MCS. In this way, the RU that selects a plurality of MCSs has higher spectral efficiency, thereby improving spectral efficiency of data transmission.

In a possible implementation, the method further includes: sending indication information, where the indication information indicates the at least two different MCSs.

In this way, the second device can determine the at least two different MCSs corresponding to the RU.

According to a second aspect, a communication method is provided. The method includes: receiving first data on an RU, where the RU corresponds to at least two different MCSs; and processing the first data.

The solution in the second aspect may be performed by a second device, or may be performed by a chip, an integrated circuit, or the like configured to perform a function of the second device. For ease of description, the following uses the second device as an example for description.

The RU uses the at least two different MCSs, so that the RU can perform data transmission based on the at least two different MCSs in one transmission process. Compared with an existing solution in which one RU uses one MCS, the foregoing solution can support further improvement on spectral efficiency of data transmission.

In a possible implementation, the method further includes: receiving indication information, where the indication information indicates the at least two different MCSs.

In this way, the second device can determine the at least two different MCSs corresponding to the RU.

In the solution according to any one of the possible implementations of the first aspect and the second aspect, the RU includes at least two subcarrier groups, and two subcarrier groups in the at least two subcarrier groups respectively correspond to different MCSs.

The RU is divided into the at least two subcarrier groups, and elements included in different subcarrier groups may be different. In other words, different subcarrier groups may include subcarriers with different indexes, and each subcarrier group may correspond to one MCS. In this way, each subcarrier group can perform data transmission by using the MCS corresponding to the subcarrier group. This can further improve spectral efficiency of data transmission.

In the solution according to any one of the possible implementations of the first aspect and the second aspect, all of the at least two subcarrier groups include a same number of data subcarriers.

In this way, the subcarrier groups having the same number of data subcarriers can share some generation parameters, for example, a parameter D in a low-density parity-check code (low-density parity-check code, LDPC) subcarrier mapper. In addition, the subcarrier groups have the same number of data subcarriers. In this case, in this application, the RU may be generated in a dual carrier modulation (dual carrier modulation, DCM) manner. This can effectively reduce processing complexity.

In the solution according to any one of the possible implementations of the first aspect and the second aspect, the at least two subcarrier groups include a first subcarrier group and a second subcarrier group, and a number of data subcarriers included in the first subcarrier group is different from a number of data subcarriers included in the second subcarrier group.

In this way, this application supports subcarrier group division performed on the RU in a plurality of forms, and that subcarrier groups need to include a same number of subcarriers is not limited. Further, a subcarrier group division type can be expanded.

In the solution according to any one of the possible implementations of the first aspect and the second aspect, the RU belongs to a multiple resource unit (multiple RU, MRU).

In this way, this application supports subcarrier group division performed on the RU in the MRU, so that the RU in the MRU can correspond to more MCSs. This can improve spectrum efficiency of data transmission.

In the solution according to any one of the possible implementations of the first aspect and the second aspect, the RU is a 996-tone RU, and the RU belongs to a 2×996-tone RU; or the RU is a 996-tone RU, and the RU belongs to a 4×996-tone RU.

In this way, this application supports subcarrier group division performed on the 996-tone RU in the 2×996-tone RU or the 4×996-tone RU.

In the solution according to any one of the possible implementations of the first aspect and the second aspect, the indication information further indicates a correspondence or association between the at least two subcarrier groups and the at least two different MCSs.

In this way, the second device can determine an MCS specifically corresponding to each subcarrier group in the RU.

In the solution according to any one of the possible implementations of the first aspect and the second aspect, the at least two subcarrier groups include the first subcarrier group and the second subcarrier group, the at least two different MCSs include a first MCS and a second MCS, the indication information includes a first field and a second field, the first field indicates the first MCS and the second MCS. When a value of the second field is a first value, the first subcarrier group corresponds to the first MCS, and the second subcarrier group corresponds to the second MCS; or when a value of the second field is a second value, the first subcarrier group corresponds to the second MCS, and the second subcarrier group corresponds to the first MCS. The first value is different from the second value.

The first MCS is different from the second MCS.

In this way, the MCS configuration table can be set more simply.

According to a third aspect, a communication apparatus is provided. The communication apparatus may be a network device, or may be a device, a module, or the like configured to perform a function of the network device.

In a possible implementation, the communication apparatus may include modules or units that are in one-to-one correspondence with the method/operations/steps/actions described in the first aspect. The module or unit may be implemented by a hardware circuit, software, or a combination of a hardware circuit and software.

According to a fourth aspect, a communication apparatus is provided. The communication apparatus may be a terminal device, or may be a device, a module, or the like configured to perform a function of the terminal device.

In a possible implementation, the communication apparatus may include modules or units that are in one-to-one correspondence with the method/operations/steps/actions described in the second aspect. The module or unit may be implemented by a hardware circuit, software, or a combination of a hardware circuit and software.

According to a fifth aspect, a communication apparatus is provided, and includes a processor. The processor is configured to enable, by executing a computer program or instructions or via a logic circuit, the communication apparatus to perform the method according to any one of the first aspect and the possible implementations of the first aspect, or the communication apparatus to perform the method according to any one of the second aspect and the possible implementations of the second aspect.

In a possible implementation, the communication apparatus further includes a memory, configured to store the computer program or the instructions.

In a possible implementation, the communication apparatus further includes a communication interface, configured to input and/or output a signal.

According to a sixth aspect, a communication apparatus is provided, and includes a logic circuit and an input/output interface. The input/output interface is configured to input and/or output a signal, and the logic circuit is configured to perform the method according to any one of the first aspect and the possible implementations of the first aspect, or the logic circuit is configured to perform the method according to any one of the second aspect and the possible implementations of the second aspect.

According to a seventh aspect, a computer-readable storage medium is provided. The computer-readable storage medium stores a computer program or instructions. When the computer program or the instructions are run on a computer, the method according to any one of the first aspect and the possible implementations of the first aspect is performed, or the method according to any one of the second aspect and the possible implementations of the second aspect is performed.

According to an eighth aspect, a computer program product is provided, and includes instructions. When the instructions are run on a computer, the method according to any one of the first aspect and the possible implementations of the first aspect is performed, or the method according to any one of the second aspect and the possible implementations of the second aspect is performed.

For descriptions of beneficial effect of any one of the third aspect to the eighth aspect, refer to descriptions of beneficial effect of the first aspect and the second aspect.

### BRIEF DESCRIPTION OF DRAWINGS

FIG. 1 is a diagram of an application scenario 100 according to an embodiment of this application;
FIG. 2 is a block diagram of a communication apparatus 200 according to an embodiment of this application;
FIG. 3 is a diagram of a tone plan and an RU plan in a 20 MHz bandwidth;
FIG. 4 is a diagram of a tone plan and an RU plan in a 40 MHz bandwidth;
FIG. 5 is a diagram of a tone plan and an RU plan in an 80 MHz bandwidth;
FIG. 6 is a schematic interaction flowchart of a communication method 600 according to an embodiment of this application;
FIG. 7 is a diagram of a relationship between an RU 1 and an MCS;
FIG. 8 is a diagram of a bisection method of an RU 1;
FIG. 9 is a diagram of a quartering method of an RU 1;
FIG. 10 is a diagram of another relationship between an RU 1 and an MCS;
FIG. 11 is a block diagram of a communication apparatus 1100 according to an embodiment of this application;
FIG. 12 is a block diagram of a communication apparatus 1200 according to an embodiment of this application;
FIG. 13 is a block diagram of a communication apparatus 1300 according to an embodiment of this application;
FIG. 14 is a block diagram of a communication apparatus 1400 according to an embodiment of this application; and
FIG. 15 is a block diagram of a communication apparatus 1500 according to an embodiment of this application.

### DESCRIPTION OF EMBODIMENTS

The following describes technical solutions of this application with reference to accompanying drawings.
1. In this application, unless otherwise specified, "a plurality of" means two or more.
2. In various embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.
3. Various numbers in this application are merely used for differentiation for ease of description, but are not intended to limit the protection scope of this application. Sequence numbers in this application do not mean an execution sequence, and the execution sequence of processes should be determined based on functions and internal logic of the processes. For example, in this specification, the claims, and the accompanying drawings of this application, the terms "first", "second", "third", "fourth", and various other number terms (if existent) are used for distinguishing between similar objects, but do not necessarily indicate a specific order or sequence. Data termed in such a way is interchangeable in an appropriate circumstance, so that embodiments described herein can be implemented in other orders than the order illustrated or described herein.
   In addition, any embodiment or design scheme described as an "example" or "for example" in this application should not be explained as being more preferred or having more advantages than another embodiment or design scheme. To be precise, use of the term "example", "for example", or the like is intended to present a related concept in a specific manner for ease of understanding.
4. The terms "include", "have", and any variants thereof are intended to cover a non-exclusive inclusion. For example, a process, a method, a system, a product, or a device that includes a series of steps or units is not necessarily limited to those expressly listed steps or units, but may include other steps or units not expressly listed or inherent to such a process, method, product, or device.
5. In this application, "indicate" may be understood as "enable", and "enable" may include "directly enable" and "indirectly enable". When a piece of information is described to enable A, the information may directly enable A or indirectly enable A, but it does not mean that the information definitely carries A.
   Information enabled by the information is referred to as to-be-enabled information. In a specific implementation process, the to-be-enabled information may be enabled in many manners, for example, but not limited to, the to-be-enabled information may be directly enabled, such as the to-be-enabled information or an index of the to-be-enabled information. Alternatively, the to-be-enabled information may be indirectly enabled by enabling other information, where there is an association between the other information and the to-be-enabled information. Alternatively, only a part of the to-be-enabled information may be enabled, and other parts of the to-be-enabled information are known or agreed in advance. For example, specific information may be enabled through a pre-agreed (for example, specified in a protocol) sequence of all information, so as to reduce enabling overheads to some extent. In addition, a common part of all information may be identified and enabled in a unified manner, so as to reduce enabling overheads caused by enabling the same information separately.
6. The term "store" or "save" in this application may mean "being stored" in one or more memories. The one or more memories may be separately disposed, or may be integrated into an encoder or a decoder, a processor, or a communication apparatus. Alternatively, a part of the one or more memories may be separately disposed, and a part of the one or more memories are integrated into a decoder, a processor, or a communication apparatus. A type of the memory may be a storage medium in any form. This is not limited.
7. The "protocol" in this application may be a standard protocol in the communication field, for example, may include: a wireless local area network system of a next-generation Wi-Fi protocol of the IEEE 802.11ax (for example, 802.11be, Wi-Fi 7, or extreme high throughput (extreme high throughput, EHT)), or may be applied to a wireless local area network system supporting a next-generation Wi-Fi protocol of the IEEE 802.11be (for example, Wi-Fi 8, 802.11bn, or ultra high reliability (ultra high reliability, UHR)), or may be applied to a wireless local area network system supporting Wi-Fi AI, or may be applied to a wireless local area network system supporting millimeter wave (mmWave), or may be applied to a wireless local area network system supporting ultra-wide band (ultra-wide band, UWB), or may be applied to a wireless local area network system supporting sensing (sensing).
8. Arrows or blocks shown by dashed lines in the diagrams of the accompanying drawings in the specification of this application indicate optional steps or optional modules.
9. In this application, unless otherwise specified, "/" indicates an "or" relationship between associated objects. For example, A/B may indicate A or B. "And/or" in this application describes only an association for describing associated objects and indicates that three relationships may exist. For example, A and/or B may indicate the following three cases: Only A exists, both A and B exist, and only B exists, where A and B may be singular or plural.

First, an application scenario to which embodiments of this application are applicable is described.

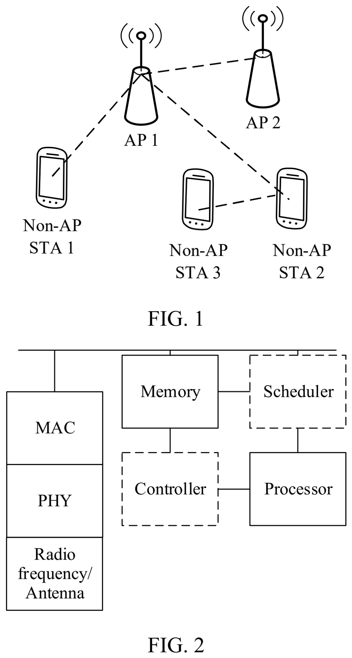

FIG. 1 is a diagram of an application scenario 100 according to an embodiment of this application. As shown in FIG. 1, a communication method provided in this application is applicable to data communication between stations (stations, STAs). The station may be an access point (access point, AP) station, or may be a non-access point station (non-access point station, non-AP STA). The access point station and the non-access point station are respectively referred to as an AP and a non-AP station for short. Specifically, the solutions of this application are applicable to data communication between an AP and one or more non-AP stations (for example, data communication between an AP 1 and both a non-AP STA 1 and a non-AP STA 2), and are also applicable to data communication between APs (for example, data communication between the AP 1 and an AP 2) and data communication between non-AP STAs (for example, data communication between the non-AP STA 2 and a non-AP STA 3).

Specifically, an access point may be a node through which a terminal (for example, a mobile phone) accesses a wired (or wireless) network, and is mainly deployed at home, in a building, or on a campus, with a typical coverage radius ranging from tens of meters to more than 100 meters, or certainly, may be deployed outdoors. The access point is equivalent to a bridge that connects a wired network and a wireless network. A main function of the access point is to connect various wireless network clients together and then connect the wireless network to the Ethernet.

Specifically, the access point may be a terminal or a network device with a Wi-Fi chip, or may be a terminal or a network device that includes a chip for accessing a wired (wireless) network. The network device may be a server, a router, a switch, a bridge, a computer, a mobile phone, a relay station, a vehicle-mounted device, a wearable device, a network device in a 5G network, a network device in a 6G network, a network device in a public land mobile communication network (public land mobile network, PLMN), or the like. This is not limited in embodiments of this application. The access point may be a device that supports a Wi-Fi standard. For example, the access point may alternatively support one or more of the following IEEE 802.11 series standards: 802.11a, 802.11b, 802.11g, 802.11n, 802.11ac, 802.11ax, 802.11be, 802.11ad, 802.11ay, and 802.11bn.

The non-AP station may be a wireless communication chip, a wireless sensor, a wireless communication terminal, or the like, and may also be referred to as a user, user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The non-AP station may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, an internet of things device, a wearable device, a terminal device in a 5G network, a terminal device in a 6G network, a terminal device in a PLMN, or the like. This is not limited in embodiments of this application. The non-AP station may be a device that supports a WLAN standard. For example, the non-AP station may support one or more of the following IEEE 802.11 series standards: 802.11a, 802.11b, 802.11g, 802.11n, 802.11ac, 802.11ax, 802.11be, 802.11ad, and 802.11ay.

For example, the non-AP station may be a mobile phone, a tablet computer, a set-top box, a smart television, a smart wearable device, a vehicle-mounted communication device, a computer, an internet of things (internet of things, IoT) node, a sensor, a smart home device like a smart camera, a smart remote control, or a smart water/electricity meter, or a sensor in a smart city.

The AP or the non-AP station may include a transmitter, a receiver, a memory, a processor, and the like. The transmitter and the receiver are respectively configured to: send and receive a packet structure. The memory is configured to: store signaling information, store a preset value that is agreed in advance, and the like. The processor is configured to parse the signaling information, process related data, and the like.

For example, FIG. 2 is a block diagram of a communication apparatus 200 according to an embodiment of this application. The communication apparatus 200 shown in FIG. 2 may be an AP or a non-AP station. A medium access control (medium access control, MAC) layer processing module, a physical (physical, PHY) layer processing module, a radio frequency/antenna, and the like are configured to implement related functions of the foregoing transmitter and receiver. As shown in FIG. 2, in addition to the MAC layer processing module, the PHY layer processing module, the radio frequency/antenna, a memory, and a processor, the communication apparatus 200 may further include a controller and a scheduler.

It may be understood that FIG. 2 shows merely an example of a communication apparatus provided in this application, and does not constitute a limitation on this application. For example, the communication apparatus 200 may alternatively not include the controller and/or the scheduler.

For ease of understanding embodiments of this application, the following first describes several nouns or terms in this application.

### 1. Subcarrier

Specifically, a radio signal is transmitted within a specific channel bandwidth. An orthogonal frequency division multiplexing (orthogonal frequency division multiplexing, OFDM) or orthogonal frequency division multiple access (orthogonal frequency division multiple access, OFDMA) technology may be used to divide a bandwidth into a plurality of frequency components at a specific frequency interval within the channel bandwidth. These frequency components are referred to as subcarriers.

In embodiments of this application, the "subcarrier" may include types such as a data subcarrier, a pilot subcarrier, a guard (guard) subcarrier, a null subcarrier, and a direct current (direct current, DC) subcarrier. The data subcarrier is used for carrying data information, and the pilot subcarrier is used for carrying pilot information.

It should be noted that, unless otherwise specified, the subcarrier in embodiments of this application may be a data subcarrier. That is, the subcarrier in embodiments of this application includes a data subcarrier used for carrying data information. For example, all subcarriers included in the subcarrier group described below may be data subcarriers, or the subcarrier group described below may be referred to as a data subcarrier group. Alternatively, in addition to the data subcarrier, the subcarrier group may further include another type of subcarrier, for example, a pilot subcarrier or a null subcarrier. In this case, the another type of subcarrier may be understood as being included in the subcarrier group, and a location of the another type of subcarrier in the subcarrier group is not limited. Alternatively, the another type of subcarrier may be inserted between the data subcarriers consecutively or inconsecutively. In this case, the subcarrier group may be understood as including only the data subcarriers, or may be understood as including all types of subcarriers. However, when the subcarrier group is understood as including only the data subcarriers, the data subcarriers in the subcarrier group may be inconsecutive in frequency domain. This is not limited.

### 2. Tone plan (Tone Plan) defined based on an RU

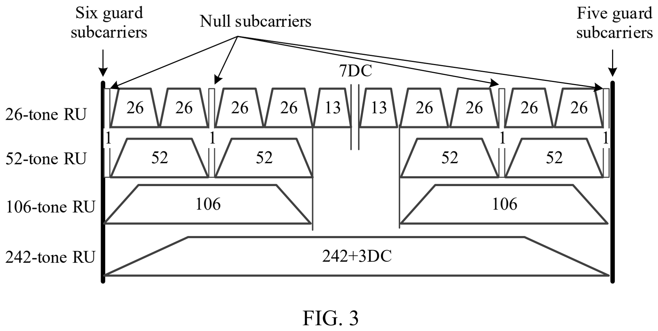

FIG. 3 is a diagram of a tone plan and an RU plan in a 20 MHz bandwidth. As shown in FIG. 3, when a bandwidth is 20 MHz, the entire bandwidth may include an entire 242-tone (tone) RU, or may include one or a combination of at least two of a 26-tone RU, a 52-tone RU, and a 106-tone RU. The 26-tone RU indicates that the RU includes 26 tones, the 52-tone RU indicates that the RU includes 52 tones, the 106-tone RU indicates that the RU includes 106 tones, and the rest can be deduced by analogy. In addition to the tones included in the RU, the bandwidth further includes some guard subcarriers, null subcarriers, or DC subcarriers.

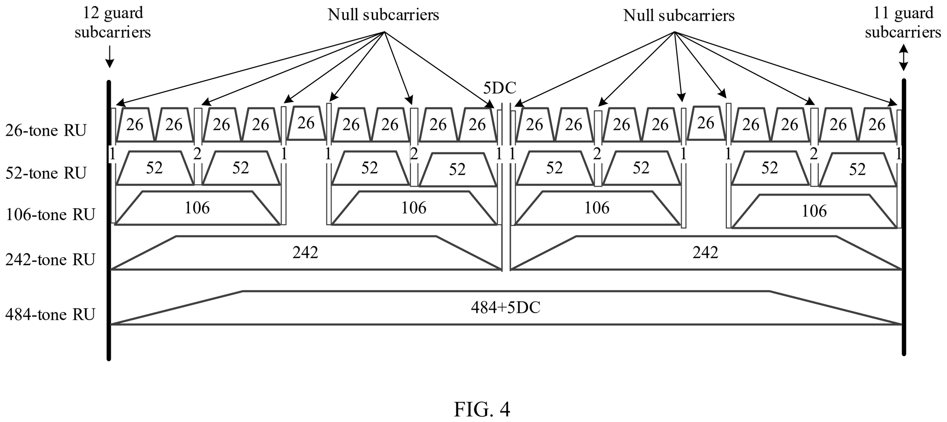

FIG. 4 is a diagram of a tone plan and an RU plan in a 40MHz bandwidth. As shown in FIG. 4, when a bandwidth is 40 MHz, the entire bandwidth is approximately equivalent to a replication of a 20 MHz tone plan. The entire bandwidth may include an entire 484-tone RU, or may include any one of a 26-tone RU, a 52-tone RU, a 106-tone RU, and a 242-tone RU, or may include a combination of at least two of a 26-tone RU, a 52-tone RU, a 106-tone RU, and a 242-tone RU.

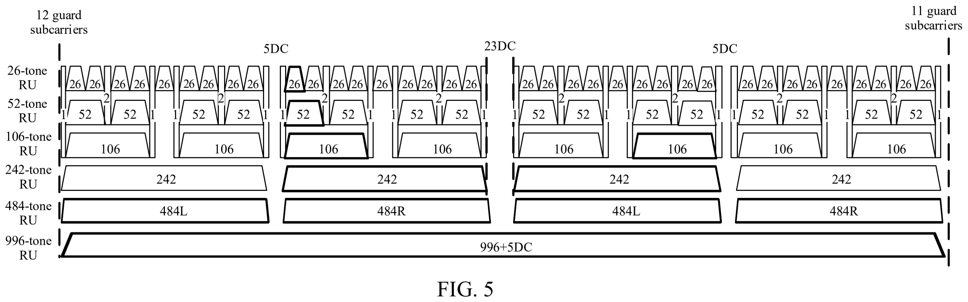

FIG. 5 is a diagram of a tone plan and an RU plan in an 80MHz bandwidth. As shown in FIG. 5, when a bandwidth is 80 MHz, the entire bandwidth may include four 242-tone RUs, or may include an entire 996-tone RU, or may include any combination of a 26-tone RU, a 52-tone RU, a 106-tone RU, a 242-tone RU, and a 484-tone RU.

When a bandwidth is 160 MHz or 80+80 MHz, the entire bandwidth may be considered as two replications of an 80 MHz tone plan, and the entire bandwidth may include an entire 2×996-tone RU, or may include any one of a 26-tone RU, a 52-tone RU, a 106-tone RU, a 242-tone RU, a 484-tone RU, and a 996-tone RU, or may include a combination of at least two of a 26-tone RU, a 52-tone RU, a 106-tone RU, a 242-tone RU, a 484-tone RU, and a 996-tone RU. When a bandwidth is 240 MHz or 160+80 MHz, the entire bandwidth may be considered as three replications of an 80 MHz tone plan. When the bandwidth is 320 MHz or 160+160 MHz, the entire bandwidth may be considered as four replications of an 80 MHz tone plan. Plan diagrams are not enumerated herein.

### 3. MRU

Specifically, the MRU includes a plurality of consecutive or inconsecutive RUs. In other words, the MRU is an RU obtained by combining a plurality of RUs (each RU may be referred to as a basic RU of the MRU). In 802.11ax, only one RU can be allocated to a user. In 802.11be, a plurality of RUs can be allocated to a user, and forms of the plurality of RUs are limited. For details, refer to the following descriptions.

For example, a plurality MRUs are introduced in the 802.11be protocol: a 52+26-tone MRU including one 52-tone RU and one 26-tone RU; a 106+26-tone MRU including one 106-tone RU and one 26-tone RU; a 484+242-tone MRU including one 484-tone RU and one 242-tone RU; a 996+484-tone MRU including one 996-tone RU and one 484-tone RU; a 242+484+996-tone MRU including one 242-tone RU, one 484-tone RU, and one 996-tone RU; a 2×996+484-tone MRU including two 996-tone RUs and one 484-tone RU; a 3×996-tone MRU including three 996-tone RUs; a 3×996+484-tone MRU including three 996-tone RUs and one 484-tone RU; and the like.

Currently, an AP and a non-AP station usually transmit a PPDU by using a fixed MCS. For example, when data is transmitted between the AP and the non-AP station by using an 80 MHz bandwidth including four 242-tone RUs, each 242-tone RU corresponds to one MCS. For example, the first 242-tone RU corresponds to an MCS 1, the second 242-tone RU corresponds to an MCS 2, the third 242-tone RU corresponds to an MCS 3, and the fourth 242-tone RU corresponds to an MCS 4. The MCS 1 is different from the MCS 2, the MCS 2 is different from the MCS 3, and the MCS 3 is different from the MCS 4. Although different RUs may separately use one MCS for data transmission, spectral efficiency of data transmission is still prone to being limited.

In view of this, this application provides a communication method and a communication apparatus, to further improve spectral efficiency of data transmission.

For ease of understanding and description, the following describes the communication method in embodiments of this application by using interaction between a first device and a second device as an example. However, this shall not constitute any limitation on an execution body of the communication method in embodiments of this application. For example, the first device may be replaced with a component (for example, a circuit, a chip, or a chip system) configured in the first device, and the second device may be replaced with a component (for example, a circuit, a chip, or a chip system) configured in the second device. The first device may be an AP or a STA, and the second device may be an AP or a STA.

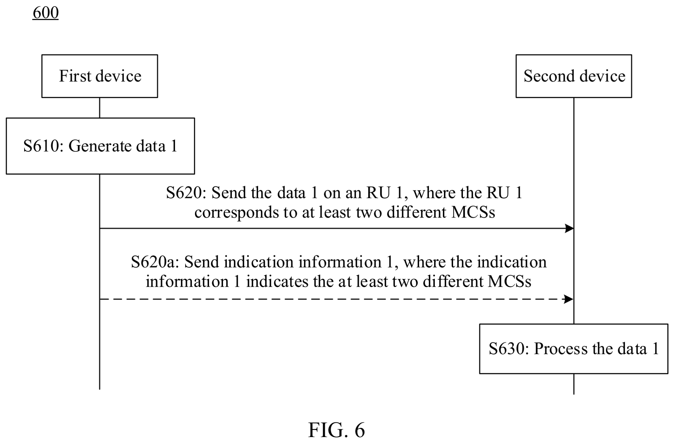

FIG. 6 is a schematic interaction flowchart of a communication method 600 according to an embodiment of this application. As shown in FIG. 6, the method 600 includes the following steps.

S610: A first device generates data 1.

S620: The first device sends the data 1 to a second device on an RU 1.

Correspondingly, the second device receives the data 1 on the RU 1.

Specifically, the data 1 is carried on the RU 1, that is, the RU 1 is a resource for transmitting the data 1. The RU 1 may belong to a bandwidth 1, and the RU 1 may be a basic RU of the bandwidth 1. The data 1 may be a PPDU 1 or a part of data in the PPDU 1, or may be information of another type or a radio frame. For ease of description, an example in which the data 1 is the PPDU 1 or the part of data in the PPDU 1 is used for description below, but is not used as a final limitation.

It may be understood that data 1 is transmitted on the RU 1, and there may further be data 2 transmitted on the RU 1. Alternatively, this application supports transmission of the data 2 on an RU 2. The RU 2 may correspond to or use one MCS or at least two different MCSs, and both the RU 1 and the RU 2 belong to the bandwidth 1. In other words, the foregoing content is described by using an example in which the data 1 is transmitted on the RU 1. However, a scenario in which the RU 1 may be further used to transmit the data 2 is not limited, or a scenario in which the data 2 is transmitted on the RU 2 is not limited. The RU 1 and the RU 2 belong to a same bandwidth, and the RU 2 may correspond to or use one MCS or at least two different MCSs. It may be understood that, in addition to the RU 1, all or a part of the data 1 may further occupy another RU like the RU 2 for transmission. In other words, the data 1 may occupy two or more basic RUs for transmission. For example, the data 1 occupies the RU 1 and the RU 2 for transmission. The RU 1 and the RU 2 are in a same bandwidth, and are both basic RUs described in this specification. The RU 1 and the RU 2 may be an MRU or a part of the MRU, and may be one 2×996-tone RU, or may be a part of one 4×996-tone RU. Alternatively, the RU 2 may correspond to or use one MCS or at least two different MCSs. Specifically, the "basic RU" in embodiments of this application is not an RU (other than the 2×996-tone RU and the 4×996-tone RU) obtained by adding a plurality of RUs as defined in 802.ax. For example, a 484+996-tone RU is not a basic RU. That is, an RU with "+" or "×" in a current standard is not a basic RU. In addition, the basic RU may be an RU of another type or size (for example, including different numbers of subcarriers). This is not limited. For a relationship between the bandwidth 1 and the RU 1, refer to Table 1 and Table 2. Content shown in Table 1 and Table 2 is merely used as examples, and is not used as a final limitation.

**Table 1**

| Bandwidth 1 | Tone Plan | RU 1 |
|---|---|---|
| 20 MHz | 9×26-tone RU | 26-tone RU |
| 20 MHz | 4×52-tone RU | 52-tone RU |
| 20 MHz | 2×106-tone RU | 106-tone RU |
| 80 MHz | 4×242-tone RU | 242-tone RU |
| 160 MHz | 4×484-tone RU | 484-tone RU |
| 160 MHz | 2×996-tone RU | 996-tone RU |
| 320 MHz | 4×996-tone RU | 996-tone RU |

As shown in Table 1, the bandwidth 1 is 20 MHz, the bandwidth 1 includes nine 26-tone RUs, and the RU 1 is the 26-tone RU; the bandwidth 1 is 20 MHz, the bandwidth 1 includes four 52-tone RUs, and the RU 1 is the 52-tone RU; the bandwidth 1 is 20 MHz, the bandwidth 1 includes two 106-tone RUs, and the RU 1 is the 106-tone RU; the bandwidth 1 is 80 MHz, the bandwidth 1 includes four 242-tone RUs, and the RU 1 is the 242-tone RU; the bandwidth 1 is 160 MHz, the bandwidth 1 includes four 484-tone RUs, and the RU 1 is the 484-tone RU; the bandwidth 1 is 160 MHz, the bandwidth 1 includes two 996-tone RUs, and the RU 1 is the 996-tone RU; and the bandwidth 1 is 320 MHz, the bandwidth 1 includes four 996-tone RUs, and the RU 1 is the 996-tone RU. In addition, the bandwidth 1 is 40 MHz or 80 MHz, and the bandwidth 1 may further include a plurality of 26-tone RUs, a plurality of 52-tone RUs, or the like. This is not specifically limited.

**Table 2**

| Bandwidth 1 | Tone Plan | RU 1 |
|---|---|---|
| 20 MHz | 106+26-tone RU+2×52-tone RU | 52-tone RU |
| 20 MHz | 106+52+26+26-tone RU | 106-tone RU |
| 80 MHz | 484-tone RU+(484+996-tone RU) | 484-tone RU |

As shown in Table 2, the bandwidth 1 is 20 MHz, the bandwidth 1 includes a 106+26-tone RU+2×52-tone RU, and the RU 1 is the 52-tone RU; the bandwidth 1 is 20 MHz, the bandwidth 1 includes a 106+52+26+26-tone RU, and the RU 1 is the 106-tone RU; the bandwidth 1 is 80 MHz, the bandwidth 1 includes a 484-tone RU+ (484+996-tone RU), and the RU 1 is the 484-tone RU. When the bandwidth 1 includes an MRU, in embodiments of this application, any or each RU in the MRU can also use different MCSs for data transmission.

In conclusion, the RU 1 may be any one of the 26-tone RU, the 52-tone RU, the 106-tone RU, the 242-tone RU, the 484-tone RU, and the 996-tone RU.

For example, the RU 1 is a 26-tone RU, and the bandwidth 1 includes a plurality of 26-tone RUs. The RU 1 is a 26-tone RU, the bandwidth 1 includes a plurality of 52+26-tone MRUs, and the RU 1 is a basic RU in the 52+26-tone MRU. The RU 1 is a 52-tone RU, and the bandwidth 1 includes a plurality of 52-tone RUs. The RU 1 is the 52-tone RU, the bandwidth 1 includes a plurality of 52+26-tone MRUs, and the RU 1 is a basic RU in the 52+26-tone MRU. The RU 1 is a 106-tone RU, and the bandwidth 1 includes a plurality of 106-tone RUs. The RU 1 is a 106-tone RU, the bandwidth 1 includes a plurality of 106+52-tone MRUs, and the RU 1 is a basic RU in the 106+52-tone MRU. The RU 1 is a 242-tone RU, and the bandwidth 1 includes a plurality of 242-tone RUs. The RU 1 is a 484-tone RU, and the bandwidth 1 includes a plurality of 484-tone RUs. The RU 1 is a 484-tone RU, the bandwidth 1 includes a plurality of 484+242-tone MRUs, and the RU 1 is a basic RU in the 484+242-tone MRU. The RU 1 is a 996-tone RU, and the bandwidth 1 includes a plurality of 996-tone RUs. The RU 1 is a 996-tone RU, the bandwidth 1 includes a plurality of 2×996+242-tone MRUs, and the RU 1 is a basic RU in the 2×996+242-tone MRU. The RU 1 is a 996-tone RU, the bandwidth 1 includes a plurality of 2×996-tone RUs, and the RU 1 is a basic RU in the 2×996-tone RU. The RU 1 is a 996-tone RU, the bandwidth 1 includes a plurality of 4×996-tone RUs, and the RU 1 is a basic RU in the 4×996-tone RU.

In conclusion, the RU 1 is the basic RU in the bandwidth 1. That is, when the bandwidth 1 includes a plurality of MRUs, the RU 1 is an RU used to form the MRU; or when the bandwidth 1 includes a plurality of RUs, the RU 1 is any one of the RUs.

In the foregoing descriptions, the RU 1 may correspond to at least two different MCSs. In other words, the RU 1 may perform data transmission by using at least two different MCSs in one transmission process. All MCSs in the at least two different MCSs may be different, or there are at least two different MCSs in the at least two different MCSs. This is not limited. The "different MCSs" may be understood as that modulation schemes are the same, but code rates are different; or code rates are the same, but modulation schemes are different; or modulation schemes and code rates are both different. It should be noted that the RU 1 may correspond to at least two different MCSs may indicate that data subcarriers in the RU 1 may correspond to the at least two different MCSs.

In embodiments of this application, modulation schemes supported in this application include but are not limited to binary phase shift keying (binary phase shift keying, BPSK), quadrature phase shift keying (quadrature phase shift keying, QPSK), 16-quadrature amplitude modulation (quadrature amplitude modulation, QAM), 64-QAM, 256-QAM, 1024-QAM, 4096-QAM, and the like. Code rates supported in this application include but are not limited to a 1/2 code rate, a 3/4 code rate, a 5/6 code rate, and the like. For descriptions of the MCS, refer to Table 3 to Table 6. For ease of description, the following uses an example in which the RU 1 corresponds to two MCSs for description. Content shown in Table 3 to Table 6 is merely used as examples, and is not used as a final limitation.

**Table 3**

| Index value | Modulation scheme 1 | Modulation scheme 2 | Code rate |
|---|---|---|---|
| 0 | 16-QAM | QPSK | 1/2 |
| 1 | QPSK | 16-QAM | 1/2 |
| 2 | 16-QAM | QPSK | 3/4 |
| 3 | QPSK | 16-QAM | 3/4 |
| 4 | 64-QAM | 16-QAM | 3/4 |
| 5 | 256-QAM | 16-QAM | 3/4 |
| 6 | 1024-QAM | 16-QAM | 3/4 |
| 7 | QPSK | 64-QAM | 3/4 |
| 8 | 16-QAM | 64-QAM | 3/4 |
| 9 | 256-QAM | 64-QAM | 3/4 |
| 10 | 1024-QAM | 64-QAM | 3/4 |
| 11 | 4096-QAM | 64-QAM | 3/4 |
| 12 | QPSK | 256-QAM | 3/4 |
| 13 | 16-QAM | 256-QAM | 3/4 |
| 14 | 64-QAM | 256-QAM | 3/4 |
| 15 | 1024-QAM | 256-QAM | 3/4 |
| 16 | 4096-QAM | 256-QAM | 3/4 |
| 17 | 16-QAM | 1024-QAM | 3/4 |
| 18 | 64-QAM | 1024-QAM | 3/4 |
| 19 | 256-QAM | 1024-QAM | 3/4 |
| 20 | 4096-QAM | 1024-QAM | 3/4 |
| 21 | 64-QAM | 4096-QAM | 3/4 |
| 22 | 256-QAM | 4096-QAM | 3/4 |
| 23 | 1024-QAM | 4096-QAM | 3/4 |
| 24 | 256-QAM | 64-QAM | 5/6 |
| 25 | 1024-QAM | 64-QAM | 5/6 |
| 26 | 4096-QAM | 64-QAM | 5/6 |
| 27 | 64-QAM | 256-QAM | 5/6 |
| 28 | 1024-QAM | 256-QAM | 5/6 |
| 29 | 4096-QAM | 256-QAM | 5/6 |
| 30 | 64-QAM | 1024-QAM | 5/6 |
| 31 | 256-QAM | 1024-QAM | 5/6 |
| 32 | 4096-QAM | 1024-QAM | 5/6 |
| 33 | 64-QAM | 4096-QAM | 5/6 |
| 34 | 256-QAM | 4096-QAM | 5/6 |
| 35 | 1024-QAM | 4096-QAM | 5/6 |

As shown in Table 3, the RU 1 corresponds to two modulation schemes, and code rates corresponding to the modulation schemes are the same. Therefore, this may be understood as that the RU 1 corresponds to two different MCSs. For example, when an index value is 0, the index value corresponds to 16-QAM, QPSK, and a code rate of 1/2. For example, when an index value is 0, the RU 1 corresponds to an MCS 1 and an MCS 2, where the MCS 1 indicates 16-QAM and a code rate of 1/2, and the MCS 2 indicates QPSK and a code rate of 1/2; or when an index value is 1, the RU 1 corresponds to an MCS 1 and an MCS 2, where the MCS 1 indicates QPSK and a code rate of 1/2, and the MCS 2 indicates 16-QAM and a code rate of 1/2.

In a possible implementation, the modulation schemes shown in Table 3 do not include BPSK, and a difference between numbers of bits corresponding to the two modulation schemes is less than or equal to 6.

**Table 4**

| Index value | Modulation scheme 1 | Modulation scheme 2 | Code rate |
|---|---|---|---|
| 0 | QPSK | BPSK | 1/2 |
| 1 | 16-QAM | BPSK | 1/2 |
| 2 | BPSK | QPSK | 1/2 |
| 3 | 16-QAM | QPSK | 1/2 |
| 4 | BPSK | 16-QAM | 1/2 |
| 5 | QPSK | 16-QAM | 1/2 |
| 6 | QPSK | BPSK | 3/4 |
| 7 | 16-QAM | BPSK | 3/4 |
| 8 | 64-QAM | BPSK | 3/4 |
| 9 | BPSK | QPSK | 3/4 |
| 10 | 16-QAM | QPSK | 3/4 |
| 11 | 64-QAM | QPSK | 3/4 |
| 12 | 256-QAM | QPSK | 3/4 |
| 13 | BPSK | 16-QAM | 3/4 |
| 14 | QPSK | 16-QAM | 3/4 |
| 15 | 64-QAM | 16-QAM | 3/4 |
| 16 | 256-QAM | 16-QAM | 3/4 |
| 17 | 1024-QAM | 16-QAM | 3/4 |
| 18 | BPSK | 64-QAM | 3/4 |
| 19 | QPSK | 64-QAM | 3/4 |
| 20 | 16-QAM | 64-QAM | 3/4 |
| 21 | 256-QAM | 64-QAM | 3/4 |
| 22 | 1024-QAM | 64-QAM | 3/4 |
| 23 | 4096-QAM | 64-QAM | 3/4 |
| 24 | QPSK | 256-QAM | 3/4 |
| 25 | 16-QAM | 256-QAM | 3/4 |
| 26 | 64-QAM | 256-QAM | 3/4 |
| 27 | 1024-QAM | 256-QAM | 3/4 |
| 28 | 4096-QAM | 256-QAM | 3/4 |
| 29 | 16-QAM | 1024-QAM | 3/4 |
| 30 | 64-QAM | 1024-QAM | 3/4 |
| 31 | 256-QAM | 1024-QAM | 3/4 |
| 32 | 4096-QAM | 1024-QAM | 3/4 |
| 33 | 64-QAM | 4096-QAM | 3/4 |
| 34 | 256-QAM | 4096-QAM | 3/4 |
| 35 | 1024-QAM | 4096-QAM | 3/4 |
| 36 | 256-QAM | 64-QAM | 5/6 |
| 37 | 1024-QAM | 64-QAM | 5/6 |
| 38 | 4096-QAM | 64-QAM | 5/6 |
| 40 | 64-QAM | 256-QAM | 5/6 |
| 41 | 1024-QAM | 256-QAM | 5/6 |
| 42 | 4096-QAM | 256-QAM | 5/6 |
| 43 | 64-QAM | 1024-QAM | 5/6 |
| 44 | 256-QAM | 1024-QAM | 5/6 |
| 45 | 4096-QAM | 1024-QAM | 5/6 |
| 46 | 64-QAM | 4096-QAM | 5/6 |
| 47 | 256-QAM | 4096-QAM | 5/6 |
| 48 | 1024-QAM | 4096-QAM | 5/6 |

As shown in Table 4, the RU 1 corresponds to two modulation schemes, and code rates corresponding to the modulation schemes are the same. Therefore, this may be understood as that the RU 1 corresponds to two different MCSs. For example, when an index value is 0, the index value corresponds to QPSK, BPSK, and a code rate of 1/2. For example, when an index value is 0, the RU 1 corresponds to an MCS 1 and an MCS 2, where the MCS 1 indicates QPSK and a code rate of 1/2, and the MCS 2 indicates BPSK and a code rate of 1/2; or when an index value is 1, the RU 1 corresponds to an MCS 1 and an MCS 2, where the MCS 1 indicates 16-QAM and a code rate of 1/2, and the MCS 2 indicates BPSK and a code rate of 1/2.

In a possible implementation, the modulation schemes shown in Table 4 include BPSK, and a difference between numbers of bits corresponding to the two modulation schemes is less than or equal to 6.

**Table 5**

| Index value | Modulation scheme 1 | Modulation scheme 2 | Code rate |
|---|---|---|---|
| 0 | 16-QAM | QPSK | 1/2 |
| 1 | QPSK | 16-QAM | 1/2 |
| 2 | 16-QAM | QPSK | 3/4 |
| 3 | 64-QAM | QPSK | 3/4 |
| 4 | QPSK | 16-QAM | 3/4 |
| 5 | 64-QAM | 16-QAM | 3/4 |
| 6 | 256-QAM | 16-QAM | 3/4 |
| 7 | QPSK | 64-QAM | 3/4 |
| 8 | 16-QAM | 64-QAM | 3/4 |
| 9 | 256-QAM | 64-QAM | 3/4 |
| 10 | 1024-QAM | 64-QAM | 3/4 |
| 11 | 16-QAM | 256-QAM | 3/4 |
| 12 | 64-QAM | 256-QAM | 3/4 |
| 13 | 1024-QAM | 256-QAM | 3/4 |
| 14 | 4096-QAM | 256-QAM | 3/4 |
| 15 | 64-QAM | 1024-QAM | 3/4 |
| 16 | 256-QAM | 1024-QAM | 3/4 |
| 17 | 4096-QAM | 1024-QAM | 3/4 |
| 18 | 256-QAM | 4096-QAM | 3/4 |
| 19 | 1024-QAM | 4096-QAM | 3/4 |
| 20 | 256-QAM | 64-QAM | 5/6 |
| 21 | 1024-QAM | 64-QAM | 5/6 |
| 22 | 64-QAM | 256-QAM | 5/6 |
| 23 | 1024-QAM | 256-QAM | 5/6 |
| 24 | 4096-QAM | 256-QAM | 5/6 |
| 25 | 64-QAM | 1024-QAM | 5/6 |
| 26 | 256-QAM | 1024-QAM | 5/6 |
| 27 | 4096-QAM | 1024-QAM | 5/6 |
| 28 | 256-QAM | 4096-QAM | 5/6 |
| 29 | 1024-QAM | 4096-QAM | 5/6 |

As shown in Table 5, for example, when an index value is 0, the index value corresponds to 16-QAM, QPSK, and a code rate of 1/2. For example, when an index value is 0, the RU 1 corresponds to an MCS 1 and an MCS 2, where the MCS 1 indicates 16-QAM and a code rate of 1/2, and the MCS 2 indicates QPSK and a code rate of 1/2; or when an index value is 2, the RU 1 corresponds to an MCS 1 and an MCS 2, where the MCS 1 indicates 16-QAM and a code rate of 3/4, and the MCS 2 indicates QPSK and a code rate of 3/4.

In a possible implementation, the modulation schemes shown in Table 5 do not include BPSK, and a difference between numbers of bits corresponding to the two modulation schemes is less than or equal to 4.

**Table 6**

| Index value | Modulation scheme 1 | Modulation scheme 2 | Code rate |
|---|---|---|---|
| 0 | QPSK | BPSK | 1/2 |
| 1 | 16-QAM | BPSK | 1/2 |
| 2 | BPSK | QPSK | 1/2 |
| 3 | 16-QAM | QPSK | 1/2 |
| 4 | BPSK | 16-QAM | 1/2 |
| 5 | QPSK | 16-QAM | 1/2 |
| 6 | QPSK | BPSK | 3/4 |
| 7 | 16-QAM | BPSK | 3/4 |
| 8 | BPSK | QPSK | 3/4 |
| 9 | 16-QAM | QPSK | 3/4 |
| 10 | 64-QAM | QPSK | 3/4 |
| 11 | BPSK | 16-QAM | 3/4 |
| 12 | QPSK | 16-QAM | 3/4 |
| 13 | 64-QAM | 16-QAM | 3/4 |
| 14 | 256-QAM | 16-QAM | 3/4 |
| 15 | QPSK | 64-QAM | 3/4 |
| 16 | 16-QAM | 64-QAM | 3/4 |
| 17 | 256-QAM | 64-QAM | 3/4 |
| 18 | 1024-QAM | 64-QAM | 3/4 |
| 19 | 16-QAM | 256-QAM | 3/4 |
| 20 | 64-QAM | 256-QAM | 3/4 |
| 21 | 1024-QAM | 256-QAM | 3/4 |
| 22 | 4096-QAM | 256-QAM | 3/4 |
| 23 | 64-QAM | 1024-QAM | 3/4 |
| 24 | 256-QAM | 1024-QAM | 3/4 |
| 25 | 4096-QAM | 1024-QAM | 3/4 |
| 26 | 256-QAM | 4096-QAM | 3/4 |
| 27 | 1024-QAM | 4096-QAM | 3/4 |
| 28 | 64-QAM | QPSK | 5/6 |
| 29 | 256-QAM | 64-QAM | 5/6 |
| 30 | 1024-QAM | 64-QAM | 5/6 |
| 31 | 64-QAM | 256-QAM | 5/6 |
| 32 | 1024-QAM | 256-QAM | 5/6 |
| 33 | 4096-QAM | 256-QAM | 5/6 |
| 34 | 64-QAM | 1024-QAM | 5/6 |
| 35 | 256-QAM | 1024-QAM | 5/6 |
| 36 | 4096-QAM | 1024-QAM | 5/6 |
| 37 | 256-QAM | 4096-QAM | 5/6 |
| 38 | 1024-QAM | 4096-QAM | 5/6 |

As shown in Table 6, for example, when an index value is 0, the index value corresponds to QPSK, BPSK, and a code rate of 1/2. For example, when the index value is 0, the RU 1 corresponds to an MCS 1 and an MCS 2, where the MCS 1 indicates QPSK and a code rate of 1/2, and the MCS 2 indicates BPSK and a code rate of 1/2; or when an index value is 2, the RU 1 corresponds to an MCS 1 and an MCS 2, where the MCS 1 indicates BPSK and a code rate of 1/2, and the MCS 2 indicates QPSK and a code rate of 1/2.

In a possible implementation, the modulation schemes shown in Table 6 include BPSK, and a difference between numbers of bits corresponding to the two modulation schemes is less than or equal to 4.

It can be learned with reference to the content in Table 3 to Table 6 that the RU 1 corresponds to two different MCSs, and the two different MCSs have a same code rate and have a difference in modulation schemes. In addition, Table 3 to Table 6 are described by using different modulation schemes as examples. When different modulation schemes need to correspond to different code rates, or a same modulation scheme needs to correspond to different code rates, corresponding columns may be added to the tables to separately indicate code rates corresponding to the modulation scheme 1 and the modulation scheme 2.

It should be noted that the content described in Table 3 to Table 6 is described by using, as an example, combinations that are of modulation schemes and code rates and that are supported in the current standard. Therefore, Table 3 to Table 6 do not include a combination that is of a modulation scheme and a code rate and that is not supported in the current standard. For example, a combination of "QPSK, BPSK, and a code rate of 5/6" is not supported in the current standard. During specific implementation, another combination that is of a modulation scheme and a code rate and that is required by a system may be included in embodiments of this application.

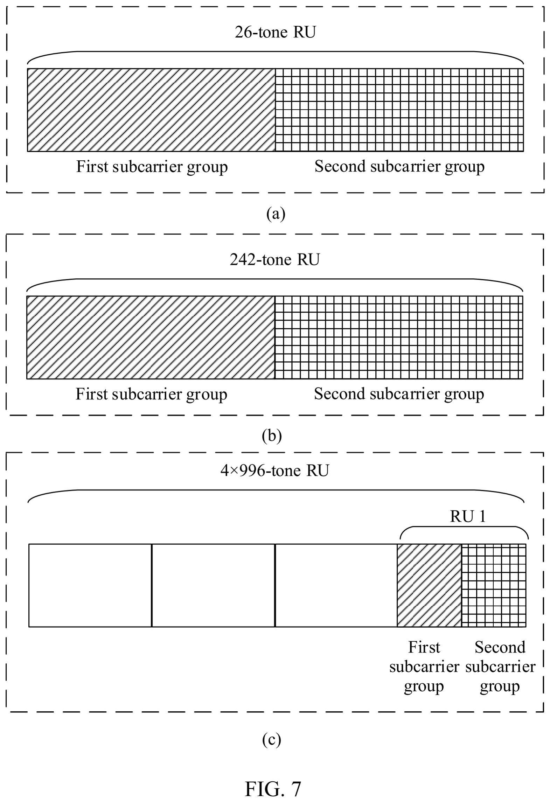

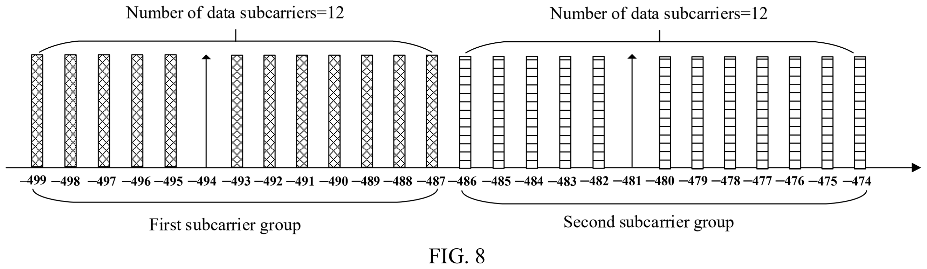

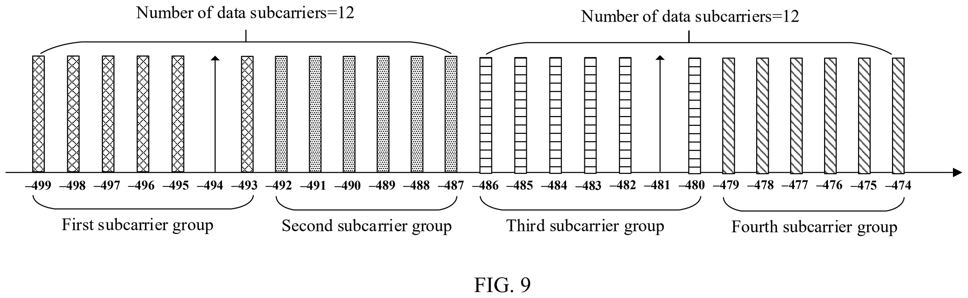

In a possible embodiment, in this application, the RU 1 includes at least two subcarrier groups, and each subcarrier group may correspond to one MCS. In this application, two of the at least two subcarrier groups respectively correspond to different MCSs. For example, the RU 1 includes M subcarrier groups, the RU 1 corresponds to M different MCSs, and one subcarrier group corresponds to one MCS. Alternatively, the RU 1 includes M subcarrier groups, the RU 1 corresponds to N different MCSs, M is greater than N, and the M subcarrier groups correspond to the N different MCSs (or one MCS may correspond to a plurality of subcarrier groups, and this is not limited) (at least two subcarrier groups separately correspond to different MCSs). For ease of description, the following uses an example in which the RU 1 includes M subcarrier groups and the RU 1 corresponds to M different MCSs for description. For a correspondence between the RU 1 and the MCS, refer to FIG. 7 to FIG. 10. It should be noted that elements included in different subcarrier groups may be different. In other words, different subcarrier groups may include subcarriers with different indexes. For details, refer to FIG. 8 and FIG. 9.

FIG. 7 is a diagram of a relationship between an RU 1 and an MCS. As shown in (a) in FIG. 7, for example, the RU 1 is a 26-tone RU. The 26-tone RU includes a first subcarrier group and a second subcarrier group. The first subcarrier group corresponds to an MCS 1, and the second subcarrier group corresponds to an MCS 2. The MCS 1 is different from the MCS 2. As shown in (b) in FIG. 7, for example, the RU 1 is a 242-tone RU. The 242-tone RU includes a first subcarrier group and a second subcarrier group. The first subcarrier group corresponds to an MCS 1, and the second subcarrier group corresponds to an MCS 2. As shown in (c) in FIG. 7, for example, the bandwidth 1 includes a 4×996-tone RU, and the RU 1 is the 996-tone RU. The 996-tone RU includes a first subcarrier group and a second subcarrier group. The first subcarrier group corresponds to an MCS 1, and the second subcarrier group corresponds to an MCS 2. For descriptions of the MCS 1 and the MCS 2, refer to the descriptions in Table 3 to Table 6. Details are not described again.

It should be noted that FIG. 7 is described by using an example in which the RU 1 includes two subcarrier groups. The RU 1 may alternatively include more than two subcarrier groups. For descriptions of data subcarriers and pilot subcarriers included in each subcarrier group, refer to FIG. 8 and FIG. 9.

FIG. 8 is a diagram of a bisection method of the RU 1. As shown in FIG. 8, for example, the RU 1 is a 26-tone RU. The 26-tone RU is equally divided into two subcarrier groups, and both of the subcarrier groups include a same number of data subcarriers (12 data subcarriers) and a same number of pilot subcarriers (one pilot subcarrier (represented by an arrow)). Each subcarrier group includes subcarriers with different indexes. An MCS 1 may be used for a first subcarrier group, and an MCS 2 may be used for a second subcarrier group. The MCS 1 is different from the MCS 2. In this way, the subcarrier groups having a same number of data subcarriers can share some generation parameters, for example, a parameter D in an LDPC subcarrier mapper. In addition, the subcarrier groups have the same number of data subcarriers. In this case, in this application, the RU may be generated in a DCM manner. This can effectively reduce processing complexity. When a subcarrier group includes a pilot subcarrier, the pilot subcarrier may be transmitted by using a modulation scheme indicated by an MCS used by the subcarrier group; or in this application, the pilot subcarrier in the subcarrier group may be transmitted by using a modulation scheme different from a modulation scheme used by a data subcarrier in the subcarrier group. This is not strictly limited.

Further, for example, the RU 1 is a 26-tone RU. When the 26-tone RU is divided into two subcarrier groups, the foregoing solution may be consistent with an existing DCM-based data subcarriers division method, and the 26-tone RU has 24 data subcarriers, but a module for generating the 12 data subcarriers on the left or the 12 data subcarriers on the right may reuse the DCM manner, so that processing complexity can be reduced. In addition, in this application, the RU 1 may alternatively be generated in another non-DCM manner.

The two subcarrier groups in FIG. 8 each include subcarriers with different indexes. For example, indexes of subcarriers included in the first subcarrier group are {499, 498, 497, 496, 495, 494, 493, 492, 491, 490, 489, 488, 487}, and indexes of subcarriers included in the second subcarrier group are {486, 485, 484, 483, 482, 481, 480, 479, 478, 477, 476, 475, 474}.

FIG. 9 is a diagram of a quartering method of the RU 1. As shown in FIG. 9, for example, the RU 1 is a 26-tone RU. The 26-tone RU is equally divided into four subcarrier groups, and all of the subcarrier groups include a same number of data subcarriers. Specifically, an MCS 1 may be used for a first subcarrier group (including a pilot subcarrier), an MCS 2 may be used for a second subcarrier group (excluding a pilot subcarrier), an MCS 3 may be used for a third subcarrier group (including a pilot subcarrier), and an MCS 4 may be used for a fourth subcarrier group (excluding a pilot subcarrier). In this way, the subcarrier groups having a same number of data subcarriers can share some generation parameters, for example, a parameter D in an LDPC subcarrier mapper. In addition, the subcarrier groups have the same number of data subcarriers. In this case, in this application, the RU may be generated in a DCM manner. This can effectively reduce processing complexity.

The four subcarrier groups in FIG. 9 each include subcarriers with different indexes. For example, indexes of subcarriers included in the first subcarrier group are {499, 498, 497, 496, 495, 494, 493}, indexes of subcarriers included in the second subcarrier group are {492, 491, 490, 489, 488, 487}, indexes of subcarriers included in the third subcarrier group are {486, 485, 484, 483, 482, 481, 480}, and indexes of subcarriers included in the fourth subcarrier group are {479, 478, 477, 476, 475, 474}.

It should be noted that the methods shown in FIG. 8 and FIG. 9 are merely examples of resources to which unequal MCSs in the RU may be applied, and do not limit a specific division manner of subcarrier groups in the RU. That is, data subcarriers in the RU may be grouped into a plurality of subcarrier groups, and different MCSs may be used for the subcarrier groups, or different MCSs may be used for at least two subcarrier groups. In view of this, more division manners may be generated. In embodiments of this application, an MRU may also be considered as a whole, and divided into a plurality of subcarrier groups.

In the foregoing content, a number of subcarrier groups in the RU 1 may be consistent with a number of MCSs corresponding to the RU 1, in other words, one subcarrier group corresponds to one MCS. For details, refer to Table 7 and Table 8. Content shown in Table 7 and Table 8 is merely used as examples, and is not used as a final limitation.

**Table 7**

| Index value | Modulation scheme 1 | Modulation scheme 2 | Modulation scheme 3 | Code rate |
|---|---|---|---|---|
| 0 | a1 | a2 | a3 | b1 |
| 1 | a2 | a3 | a1 | b2 |

As shown in Table 7, the RU 1 includes three subcarrier groups: a subcarrier group 1, a subcarrier group 2, and a subcarrier group 3. An index value is 0, the subcarrier group 1 corresponds to a modulation scheme a1, the subcarrier group 2 corresponds to a modulation scheme a2, the subcarrier group 3 corresponds to a modulation scheme a3, and all the three subcarrier groups correspond to a code rate b1. An index value is 1, the subcarrier group 1 corresponds to a modulation scheme a2, the subcarrier group 2 corresponds to a modulation scheme a3, the subcarrier group 3 corresponds to a modulation scheme a1, and all the three subcarrier groups correspond to a code rate b2. The modulation schemes a1 to a3 are the modulation schemes described above, and the code rates b1 and b2 are the code rates described above. The modulation schemes a1 to a3 each may be referred to as an MCS (corresponding to a same bit rate).

**Table 8**

| Index value | Modulation scheme 1 | Modulation scheme 2 | Modulation scheme 3 | Bit rate 1 | Bit rate 2 | Bit rate 3 |
|---|---|---|---|---|---|---|
| 0 | a1 | a2 | a3 | b1 | b2 | b3 |
| 1 | a2 | a3 | a1 | b2 | b1 | b3 |

As shown in Table 8, the RU 1 includes three subcarrier groups: a subcarrier group 1, a subcarrier group 2, and a subcarrier group 3. An index value is 0, the subcarrier group 1 corresponds to a modulation scheme a1 and a code rate b1, the subcarrier group 2 corresponds to a modulation scheme a2 and a code rate b2, and the subcarrier group 3 corresponds to a modulation scheme a3 and a code rate b3. An index value is 1, the subcarrier group 1 corresponds to a modulation scheme a2 and a code rate b2, subcarrier group 2 corresponds to a modulation scheme a3 and a code rate b1, and the subcarrier group 3 corresponds to a modulation scheme a1 and a code rate b3. The modulation schemes a1 to a3 are the modulation schemes described above, and the code rates b1 to b3 are the code rates described above. The modulation scheme a1 and the code rate b1 may be referred to as an MCS, the modulation scheme a2 and the code rate b2 may be referred to as an MCS, and the modulation scheme a3 and the code rate b3 may be referred to as an MCS.

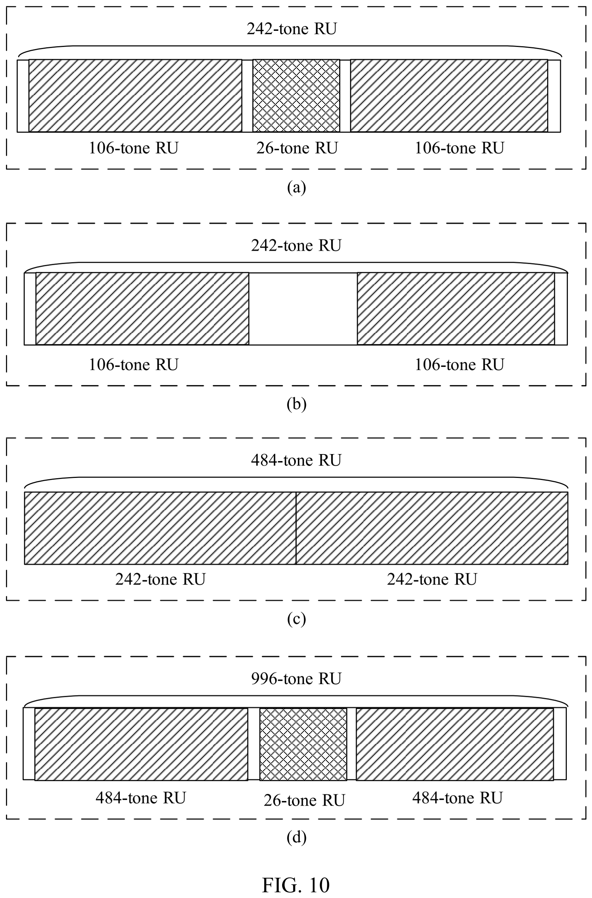

FIG. 10 is a diagram of another relationship between the RU 1 and an MCS. As shown in (a) in FIG. 10, for example, the RU 1 is a 242-tone RU. The 242-tone RU includes three subcarrier groups, and a total number of subcarriers included in the three subcarrier groups is less than a number of subcarriers included in the 242-tone RU. Two of the three subcarrier groups are referred to as 106-tone RUs, and the other subcarrier group is referred to as a 26-tone RU. As shown in (b) in FIG. 10, for example, the RU 1 is a 242-tone RU. The 242-tone RU includes two subcarrier groups, each subcarrier group may be referred to as a 106-tone RU, and a total number of subcarriers included in the two subcarrier groups is less than a number of subcarriers included in the 242-tone RU. As shown in (c) in FIG. 10, for example, the RU 1 is a 484-tone RU. The 484-tone RU includes two subcarrier groups, each subcarrier group is referred to as a 242-tone RU, and a total number of subcarriers included in the two subcarrier groups is equal to a number of subcarriers included in the 484-tone RU. As shown in (d) in FIG. 10, for example, the RU 1 is a 996-tone RU. The 996-tone RU includes three subcarrier groups: a 484-tone RU, a 484-tone RU, and a 26-tone RU. A total number of subcarriers included in the three subcarrier groups is less than a number of subcarriers included in the 996-tone RU.

The content shown in FIG. 10 is described by using an example in which the RU 1 is divided into a plurality of RUs. For example, the RU 1 is a 106-tone RU. The 106-tone RU may include two 52-tone RUs. For example, the RU is a 242-tone RU. The 242-tone RU may include two 106-tone RUs and one 26-tone RU.

In FIG. 7 to FIG. 10, a subcarrier group may include only a data subcarrier, or may include both a data subcarrier and a pilot subcarrier (which is used as an example for description). When the subcarrier group includes only a data subcarrier, numbers of data subcarriers included in subcarrier groups may be the same (or may be different). When the subcarrier group includes a data subcarrier and a pilot subcarrier, numbers of data subcarriers and numbers of pilot subcarriers included in subcarrier groups each may be the same (or different numbers of pilot subcarriers may be included), or numbers of data subcarriers included in subcarrier groups may be the same. The data subcarrier is a subcarrier used for carrying data information, and the pilot subcarrier is a subcarrier used for carrying pilot information.

It may be understood that when an RU to which a data subcarrier and a pilot subcarrier belong is not allocated to any user or is not allocated for information transmission, the RU may not be used for carrying specific data and a specific pilot. "The RU 1 corresponds to at least two different MCSs" mainly indicates that data subcarriers in the RU 1 correspond to or use at least two different MCSs.

When the RU 1 includes at least two subcarrier groups, a number of subcarriers included in the at least two subcarrier groups may be less than or equal to a number of subcarriers included in the RU 1. All of the subcarrier groups may include a same number of data subcarriers. In this way, the subcarrier groups having the same number of data subcarriers can share some generation parameters, for example, a parameter D in an LDPC subcarrier mapper. In addition, the subcarrier groups have the same number of data subcarriers. In this case, in this application, the RU may be generated in a DCM manner. This can effectively reduce processing complexity. When the RU 1 includes at least two subcarrier groups, the at least two subcarrier groups may include at least two subcarrier groups having different numbers of data subcarriers. For example, a 26-tone RU includes three subcarrier groups, where a first subcarrier group includes eight subcarriers (including four data subcarriers), a second subcarrier group includes eight subcarriers (including seven data subcarriers and one pilot subcarrier), and a third subcarrier group includes 14 subcarriers (including 13 data subcarriers and one pilot subcarrier). In this way, this application supports subcarrier group division performed on the RU 1 in a plurality of forms, and that subcarrier groups need to include a same number of subcarrier groups is not limited. Further, a subcarrier group division type of the RU 1 can be expanded.

In conclusion, the RU 1 is divided into at least two subcarrier groups, and each subcarrier group corresponds to one MCS, so that an MCS corresponding to each subcarrier group may be used for the subcarrier group for data transmission. In this way, spectral efficiency of data transmission can be further improved.

S630: The second device processes the data 1.

Specifically, after receiving the data 1, the second device processes the data 1 to obtain information carried in the data 1.

In conclusion, the RU 1 uses at least two different MCSs, so that the RU 1 can perform data transmission based on the at least two different MCSs in one transmission process. Compared with an existing solution in which one RU uses one MCS, the foregoing solution can support further improvement on spectral efficiency of data (or a PPDU) transmission.

Specifically, subcarriers (or subcarrier groups) in the RU 1 may select appropriate MCSs based on conditions such as channels, interference, and noise corresponding to the subcarriers (or subcarrier groups). In comparison with a solution in which a same RU corresponds to one MCS, one RU may correspond to different MCSs. This helps select MCSs more flexibly. In addition, a higher-order MCS has a higher modulation order or a higher code rate than a lower-order MCS. In this way, the RU 1 that selects a plurality of MCSs has higher spectral efficiency, thereby improving spectral efficiency of data transmission.

In a possible embodiment, the method 600 may further include the following step.

S620a: The first device sends indication information 1 to the second device, where the indication information 1 indicates the at least two different MCSs.

Correspondingly, the second device receives the indication information 1, and determines, based on the indication information 1, the at least two different MCSs corresponding to the RU 1. In this way, the second device can determine the at least two different MCSs corresponding to the RU 1.

In a possible implementation, the indication information 1 may indicate a correspondence between at least two subcarrier groups and the at least two different MCSs. In this way, the second device can determine an MCS corresponding to each subcarrier group in the RU 1.

Specifically, the indication information 1 may be an index value, and the index value indicates the MCS corresponding to each subcarrier group. For details, refer to Table 3 to Table 6. Details are not described again. An execution sequence between S620a and S610 is not limited in embodiments of this application.

In a possible embodiment, when the RU 1 includes two subcarrier groups (for example, a first subcarrier group and a second subcarrier group), the RU 1 corresponds to two different MCSs, and the indication information 1 may include a swap bit (or an exchange bit (exchange bit)) or a permutation bit that is used to exchange the MCSs respectively corresponding to the two subcarrier groups in the RU 1. In this way, a number of entries in an MCS configuration table can be reduced. For example, the RU 1 corresponds to two different MCSs. After the swap bit is used for indication, 30 (as an example) types of combinations of the two different MCSs corresponding to the RU 1 may be reduced to 15 types of combinations. In this way, the MCS configuration table is set more concisely. For details, refer to the following descriptions.

In a possible embodiment, the indication information 1 includes a first field and a second field, the first field indicates an MCS 1 and an MCS 2. When a value of the second field is a first value, the first subcarrier group corresponds to the MCS 1, and the second subcarrier group corresponds to the MCS 2; or when a value of the second field is a second value, the first subcarrier group corresponds to the MCS 2, and the second subcarrier group corresponds to the MCS 1. For details, refer to Table 9.

**Table 9**

| Index value | Modulation scheme 1 | Modulation scheme 2 | Code rate |
|---|---|---|---|
| 0 | 16-QAM | QPSK | 1/2 |
| 1 | 16-QAM | QPSK | 3/4 |
| 2 | 64-QAM | QPSK | 3/4 |
| 3 | 64-QAM | 16-QAM | 3/4 |
| 4 | 256-QAM | 16-QAM | 3/4 |
| 5 | 256-QAM | 64-QAM | 3/4 |
| 6 | 1024-QAM | 64-QAM | 3/4 |
| 7 | 1024-QAM | 256-QAM | 3/4 |
| 8 | 4096-QAM | 256-QAM | 3/4 |
| 9 | 4096-QAM | 1024-QAM | 3/4 |
| 10 | 256-QAM | 64-QAM | 5/6 |
| 11 | 1024-QAM | 64-QAM | 5/6 |
| 12 | 1024-QAM | 256-QAM | 5/6 |
| 13 | 4096-QAM | 256-QAM | 5/6 |
| 14 | 4096-QAM | 1024-QAM | 5/6 |

As shown in Table 9, when a value of the first field is 0, the first field indicates 16-QAM, QPSK, and a code rate of 1/2. When the value of the second field is the first value, the first subcarrier group corresponds to 16-QAM, the second subcarrier group corresponds to QPSK, and code rates of the first subcarrier group and the second subcarrier group are both 1/2; or when the value of the second field is the second value, the second subcarrier group corresponds to 16-QAM, the first subcarrier group corresponds to QPSK, and code rates of the first subcarrier group and the second subcarrier group are both 1/2. In this way, the MCS table can be more concise.

It should be noted that the first value may be 0, and the second value may be 1; or the first value may be 1, and the second value may be 0. In addition, this application supports other possibilities. This is not limited.

Optionally, in this application, it may alternatively be specified that a modulation scheme used for the first subcarrier group in the RU 1 is less than or equal to a modulation scheme used for the second subcarrier group. In this way, the MCS configuration table can be further simplified.

In embodiments of this application, when the RU 1 corresponds to a plurality of subcarrier groups, in this application, an MCS used for each subcarrier group may be indicated based on content shown in Table 10 and Table 11. For details, refer to Table 10 and Table 11. Content shown in Table 10 and Table 11 is merely used as examples, and is not used as a final limitation.

**Table 10**

| Index value | Number of subcarrier groups | MCS used for each subcarrier group | | | |
|---|---|---|---|---|---|
| x1 | 2 | A2 | B2 | | |
| | 3 | A3 | B3 | C3 | |
| | 4 | A4 | B4 | C4 | D4 |
| X2 | 2 | ... | ... | | |
| | 3 | ... | ... | ... | |
| | 4 | ... | ... | ... | ... |
| ... | ... | ... | ... | ... | ... |

As shown in Table 10, for example, each index value indicates an MCS used for each subcarrier group. For example, an index value x1 indicates A2 and B2, and an index value x2 indicates A3, B3, and C3. For example, A2, A3, B2, B3, and B4 may represent one MCS, and the MCS is associated with a modulation scheme and a code rate. In this way, in this application, an RU including a plurality of subcarrier groups may indicate a plurality of corresponding MCSs.

One index value in Table 10 may indicate a plurality of entries, that is, one index value may simultaneously indicate MCSs used for all subcarrier groups in different numbers of subcarrier groups. When the plurality of MCSs used by the RU are indicated in the form of Table 10, in this application, a number of required MCSs or a number of subcarrier groups in the RU may be indicated by an additional bit. In this way, the second device determines the MCSs specifically used by the RU 1.

**Table 11**

| Index value | MCS used for each subcarrier group | | | |
|---|---|---|---|---|
| x1 | A1 | B1 | | |
| x2 | A2 | B2 | | |
| x3 | A3 | B3 | C3 | |
| ... | ... | ... | ... | ... |

As shown in Table 11, for example, an index value indicates an MCS used for each of a plurality of subcarrier groups. For example, an index value x1 indicates A1 (corresponding to one subcarrier group) and B1 (corresponding to one subcarrier group), and an index value x2 indicates A2 (corresponding to one subcarrier group) and B2 (corresponding to one subcarrier group). In this way, in this application, an RU including a plurality of subcarrier groups may indicate a plurality of corresponding MCSs.

Different index values in Table 11 may respectively indicate different numbers of entries, that is, different index values may indicate MCSs used for all the subcarrier groups in different numbers of subcarrier groups.

In a possible embodiment, the unequal MCS indication manner in this embodiment of this application may be used in combination with an existing MCS indication manner, or the unequal MCS indication manner in this embodiment of this application may reuse an existing MCS index indication manner. This is not limited.

It should be noted that content shown in Table 3 to Table 11 is merely used as examples for understanding, and is not used as a final limitation. Table 3 to Table 11 may also be used in combination with existing signaling for indicating an RU. The RU signaling indication may be as follows:
1) allocating an entry for the RU newly defined based on unequal MCSs, for example, an entry directly indicates a 106-tone RU+106-tone RU, or directly indicating a 242-tone RU divided into a plurality of parts; or
2) reusing an original entry, but using additional signaling to indicate whether the original entry corresponds to unequal MCSs.

MCS indexes indicate only the unequal MCSs in the foregoing example, and may alternatively be used together with an existing MCS index for indication. Details are not described again.

In conclusion, in this application, the RU 1 can correspond to or use at least two MCSs for transmission. Specifically, the RU 1 includes at least two subcarrier groups, and each subcarrier group corresponds to one MCS. In this way, the corresponding MCS may be used for each subcarrier group for data transmission. This can further improve spectral efficiency of data transmission.

In embodiments of this application, an example in which the RU 1 is divided into subcarrier groups or RUs with a lower granularity is used for description. However, any variant embodiment obtained based on the foregoing descriptions shall fall within the scope of embodiments described in embodiments of this application.

Finally, apparatus embodiments in embodiments of this application are described.

To implement functions in the method provided in this application, the first device and the second device each may include a hardware structure and/or a software module, and the foregoing functions are implemented by using the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

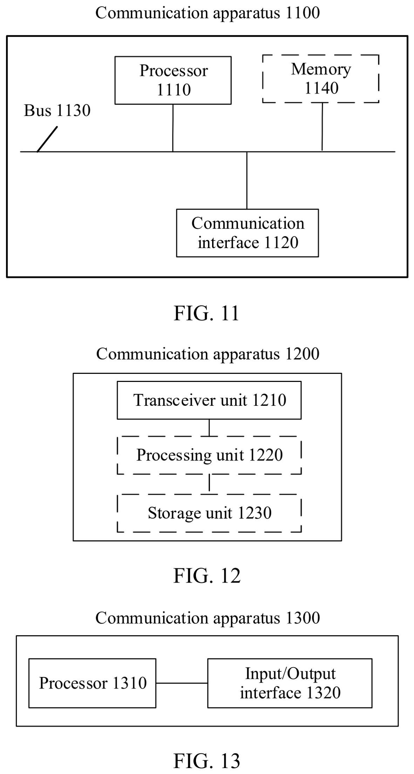

FIG. 11 is a block diagram of a communication apparatus 1100 according to an embodiment of this application. The communication apparatus 1100 includes a processor 1110 and a communication interface 1120. The processor 1110 and the communication interface 1120 may be connected to each other through a bus 1130. The communication apparatus 1100 may be a first device or a second device.

Optionally, the communication apparatus 1100 may further include a memory 1140. The memory 1140 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1140 is configured to store related instructions and data.

The processor 1110 may be one or more central processing units (central processing units, CPUs). When the processor 1110 is one CPU, the CPU may be a single-core CPU or a multicore CPU.

When the communication apparatus 1100 is the first device, for example, the processor 1110 is configured to perform the following operations: generating data 1; sending the data 1 to the second device on an RU 1; and the like.

When the communication apparatus 1100 is the second device, for example, the processor 1110 is configured to perform the following operations: receiving the data 1 on the RU 1; processing the data 1; and the like.

The content is merely used as an example for description. When the communication apparatus 1100 is the first device/second device, the communication apparatus 1100 is responsible for performing the method or steps related to the first device/second device in the foregoing method embodiment.

The foregoing descriptions are merely examples. For specific content, refer to the content shown in the method embodiment. For implementations of the operations in FIG. 11, refer to the corresponding descriptions of the method embodiment shown in FIG. 6 to FIG. 10.

FIG. 12 is a block diagram of a communication apparatus 1200 according to an embodiment of this application. The communication apparatus 1200 may be a first device/second device, or may be a chip or a module in the first device/second device, and is configured to implement the method in the foregoing embodiments. The communication apparatus 1200 includes a transceiver unit 1212 and a processing unit 1220. The following illustrates the transceiver unit 1212 and the processing unit 1220.

Optionally, the transceiver unit 1212 may include a transmit unit and a receive unit. The transmit unit is configured to perform a transmit action of the communication apparatus, and the receive unit is configured to perform a receive action of the communication apparatus. For ease of description, in embodiment of this application, the transmit unit and the receive unit are combined into one transceiver unit. This is described herein once for all, and details are not described below again.

When the communication apparatus 1200 is the first device, for example, the processing unit 1220 is configured to generate data 1, and the transceiver unit 1212 is configured to: send the data 1 to the second device on an RU 1; and the like.

When the communication apparatus 1200 is the second device, for example, the transceiver unit 1212 is configured to receive the data 1 on the RU 1, and the processing unit 1220 is configured to process the data 1; and the like.

The content is merely used as an example for description. When the communication apparatus 1200 is the first device/second device, the communication apparatus 1200 is responsible for performing the method or steps related to the first device/second device in the foregoing method embodiment.

Optionally, the communication apparatus 1200 further includes a storage unit 1230. The storage unit 1230 is configured to store a program or code used for performing the foregoing method.

The apparatus embodiments shown in FIG. 11 and FIG. 12 are used for implementing the content described in FIG. 6 to FIG. 8. For specific execution steps and methods of the apparatuses shown in FIG. 11 and FIG. 12, refer to the content described in the foregoing method embodiment.

FIG. 13 is a block diagram of a communication apparatus 1300 according to an embodiment of this application. The communication apparatus 1300 is configured to implement a function of a first device/second device. The communication apparatus 1300 may be a chip in the first device/second device.

The communication apparatus 1300 includes an input/output interface 1320 and a processor 1310. The input/output interface 1320 may be an input/output circuit. The processor 1310 may be a signal processor, a chip, or another integrated circuit that can implement the method in this application. The input/output interface 1320 is configured to input or output a signal or data.

For example, when the communication apparatus 1300 is the first device, the input/output interface 1320 is configured to send data 1 to the second device on an RU 1. The processor 1310 is configured to generate the data 1. The processor 1310 is further configured to perform some or all steps of any method provided in this application.

For example, when the communication apparatus 1300 is the second device, the input/output interface 1320 is configured to receive data 1 on an RU 1. The processor 1310 is configured to process the data 1. In addition, the processor 1310 is further configured to perform some or all steps of any method provided in this application.

In a possible implementation, the processor 1310 executes instructions stored in a memory, to implement the function implemented by the network device or the terminal device.

Optionally, the communication apparatus 1300 further includes the memory.

Optionally, the processor and the memory are integrated together.

Optionally, the memory is located outside the communication apparatus 1300.

In a possible implementation, the processor 1310 may be a logic circuit, and the processor 1310 inputs/outputs a message or signaling through the input/output interface 1320. The logic circuit may be a signal processor, a chip, or another integrated circuit that can implement the method in embodiments of this application.

The foregoing descriptions of the communication apparatus 1300 are merely an example for description. The communication apparatus 1300 can be configured to perform the method in the foregoing embodiments. For specific content, refer to the descriptions of the foregoing method embodiment. Details are not described herein again.

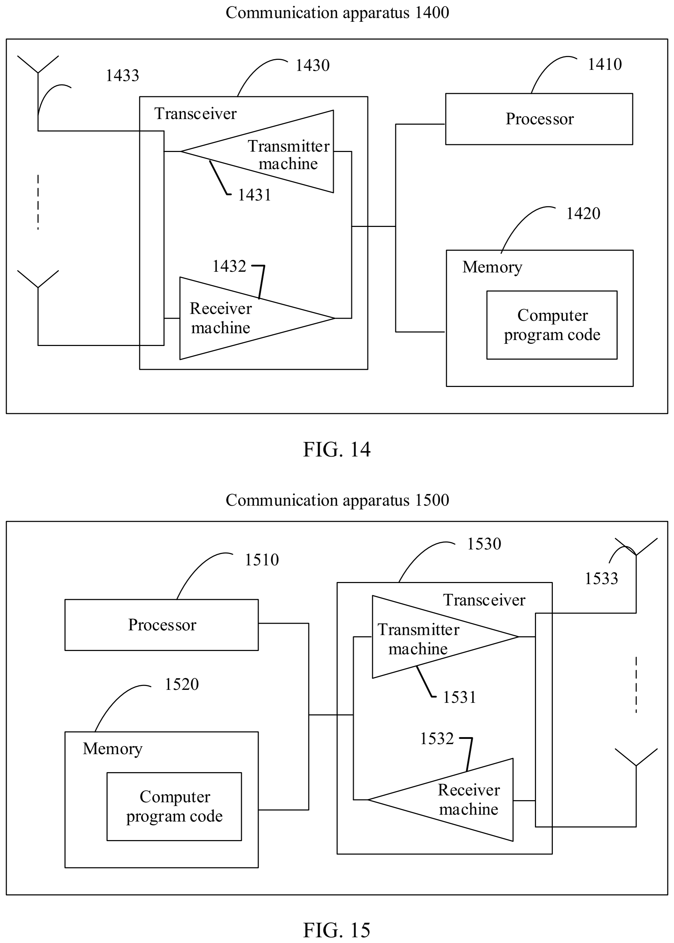

FIG. 14 is a block diagram of a communication apparatus 1400 according to an embodiment of this application. The communication apparatus 1400 may be an AP or a chip. The communication apparatus 1400 is configured to perform the operations performed by the AP in the method embodiment shown in FIG. 6 to FIG. 10.

When the communication apparatus 1400 is the AP, for example, a base station, FIG. 14 is a simplified diagram of a structure of the base station. The base station includes a module 1410, a module 1420, and a module 1430. The module 1410 is mainly configured to: perform baseband processing, control the base station, and the like. The module 1410 is usually a control center of the base station, may be usually referred to as a processor, and is configured to control the base station to perform a processing operation on a network device side in the foregoing method embodiment. The module 1420 is mainly configured to store computer program code and data. The module 1430 is mainly configured to: receive and send a radio frequency signal, and perform conversion between the radio frequency signal and a baseband signal. The module 1430 may be usually referred to as a transceiver module, a transceiver machine, a transceiver circuit, a transceiver, or the like. The transceiver module in the module 1430 may also be referred to as a transceiver machine, a transceiver, or the like. The transceiver module includes an antenna 1433 and a radio frequency circuit (not shown in FIG. 14). The radio frequency circuit is mainly configured to perform radio frequency processing. Optionally, in the module 1430, a component configured to implement a receiving function may be considered as a receiver machine, and a component configured to implement a sending function may be considered as a transmitter machine. In other words, the module 1430 includes a receiver machine 1432 and a transmitter machine 1431. The receiver machine may also be referred to as a receiving module, a receiver, a receiving circuit, or the like, and the transmitter machine may be referred to as a transmitting module, a transmitter, a transmitting circuit, or the like.

The module 1410 and the module 1420 may include one or more boards, and each board may include one or more processors and one or more memories. The processor is configured to: read and execute a program in the memory, to implement a baseband processing function and control the base station. If there are a plurality of boards, the boards may be interconnected with each other to enhance a processing capability. In an optional implementation, a plurality of boards may share one or more processors, or a plurality of boards may share one or more memories, or a plurality of boards may simultaneously share one or more processors.

For example, in an implementation, the transceiver module in the module 1430 is configured to perform receiving and sending-related processes performed by the AP in the embodiments shown in FIG. 6 to FIG. 10. The processor in the module 1410 is configured to perform a processing-related process performed by the AP in the embodiments shown in FIG. 6 to FIG. 10.

In another implementation, the processor in the module 1410 is configured to perform a process-related process performed by a communication device in the embodiments shown in FIG. 6 to FIG. 10.

In another implementation, the transceiver module in the module 1430 is configured to perform receiving and sending-related processes performed by a communication device in the embodiments shown in FIG. 6 to FIG. 10.

It should be understood that FIG. 14 is merely an example but not a limitation. The AP including the processor, the memory, and the transceiver may not depend on the structures shown in FIG. 11 to FIG. 13.

When the communication apparatus 1400 is a chip, the chip includes a transceiver, a memory, and a processor. The transceiver may be an input/output circuit or a communication interface. The processor is a processor, a microprocessor, or an integrated circuit integrated on the chip. The sending operation performed by the network device in the foregoing method embodiment may be understood as output of the chip, and the receiving operation performed by the network device in the foregoing method embodiment may be understood as input of the chip.

FIG. 15 is a block diagram of a communication apparatus 1500 according to an embodiment of this application. The communication apparatus 1500 may be a non-AP station, a processor of a non-AP station, or a chip. The communication apparatus 1500 may be configured to perform the operations performed by the STA or the communication device in the foregoing method embodiment.

When the communication apparatus 1500 is a non-AP station, FIG. 15 is a simplified diagram of a structure of a terminal device. As shown in FIG. 15, the terminal device includes a processor, a memory, and a transceiver. The memory may store computer program code. The transceiver includes a transmitter machine 1531, a receiver machine 1532, a radio frequency circuit (not shown in FIG. 15), an antenna 1533, and an input/output apparatus (not shown in FIG. 15).

The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of electromagnetic wave. The input/output apparatus, for example, a touchscreen, a display, or a keyboard, is mainly configured to: receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 15 merely shows one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In embodiments of this application, the antenna and the radio frequency circuit that have sending and receiving functions may be considered as a transceiver module in the terminal device, and the processor that has a processing function may be considered as a processing module in the terminal device.

As shown in FIG. 15, the non-AP station includes a processor 1510, a memory 1520, and a transceiver 1530. The processor 151 may be referred to as a processing unit, a processing board, a processing module, a processing apparatus, or the like. The transceiver 1530 may also be referred to as a transceiver unit, a transceiver machine, a transceiver apparatus, or the like.

Optionally, a component that is in the transceiver 1530 and that is configured to implement a receiving function may be considered as a receiving module, and a component that is in the transceiver 1530 and that is configured to implement a sending function may be considered as a transmitting module. In other words, the transceiver 1530 includes a receiver and a transmitter. The transceiver sometimes may also be referred to as a transceiver machine, a transceiver module, a transceiver circuit, or the like. The receiver sometimes may also be referred to as a receiver machine, a receiving module, a receiving circuit, or the like. The transmitter sometimes may also be referred to as a transmitter machine, a transmitting module, a transmitting circuit, or the like.

For example, in an implementation, the processor 1510 is configured to perform a processing action of the non-AP station in the embodiments shown in FIG. 6 to FIG. 10, and the transceiver 1530 is configured to perform receiving and sending actions of the non-AP station in FIG. 6 to FIG. 10.

For example, in an implementation, the processor 1510 is configured to perform a processing action of the non-AP station in the embodiments shown in FIG. 6 to FIG. 10, and the transceiver 1530 is configured to perform receiving and sending actions of the non-AP station in FIG. 6 to FIG. 10.

It should be understood that FIG. 15 is merely an example but not a limitation, and the terminal device including the transceiver module and the processing module may not depend on the structures shown in FIG. 11 to FIG. 13.

When the communication apparatus 1500 is a chip, the chip includes a processor, a memory, and a transceiver. The transceiver may be an input/output circuit or a communication interface. The processor may be a processing module, a microprocessor, or an integrated circuit integrated on the chip. The sending operation performed by the terminal device in the foregoing method embodiment may be understood as output of the chip, and the receiving operation performed by the terminal device in the foregoing method embodiment may be understood as input of the chip.

This application further provides a chip, including a processor. The processor is configured to invoke, from a memory, instructions stored in the memory and run the instructions, to enable a communication device on which the chip is installed to perform the method in the foregoing examples.

This application further provides another chip, including an input interface, an output interface, and a processor. The input interface, the output interface, and the processor are connected to each other through an internal connection path. The processor is configured to execute code in a memory. When the code is executed, the processor is configured to perform the method in the foregoing examples. Optionally, the chip further includes the memory. The memory is configured to store a computer program or code.

This application further provides a processor, configured to be coupled to a memory, and configured to perform the method and the function that are related to the network device or the terminal device in any one of the foregoing embodiments.

Another embodiment of this application provides a computer program product including instructions. When the computer program product runs on a computer, the method in the foregoing embodiments is implemented.

This application further provides a computer program. When the computer program is run on a computer, the method in the foregoing embodiments is implemented.

Another embodiment of this application provides a computer-readable storage medium. The computer-readable storage medium stores a computer program. When the computer program is executed by a computer, the method in the foregoing embodiments is implemented.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it shall not be considered that the implementation goes beyond the scope of this application.

It may be clearly understood by a person skilled in the art that, for the purpose of convenient and brief description, for detailed working processes of the foregoing system, apparatuses, and units, refer to corresponding processes in the foregoing method embodiment. Details are not described herein again.

In several embodiments provided in this application, the disclosed system, apparatuses, and method may be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one location, or may be distributed on a plurality of network units. Some or all of the units may be selected based on actual requirements to achieve the objectives of the solutions in embodiments.

In addition, functional units in embodiments of this application may be integrated into one processing unit, or each of the units may exist alone physically, or two or more units may be integrated into one unit.

When functions are implemented in a form of software functional unit and sold or used as an independent product, the functions may be stored in a computer-readable storage medium. Based on such an understanding, the technical solutions in embodiments of this application essentially, or the part contributing to the conventional technology, or some of the technical solutions may be implemented in a form of software product. The computer software product is stored in a storage medium, and includes several instructions for instructing a computer device (which may be a personal computer, a server, a network device, or the like) to perform all or some of the steps in the method described in embodiments of this application. The foregoing storage medium includes any medium that can store program code, for example, a USB flash drive, a removable hard disk, a ROM, a RAM, a magnetic disk, or an optical disc.

The foregoing descriptions are merely specific implementations in embodiments of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communication method, comprising:
generating first data; and
sending the first data on a resource unit RU, wherein the RU corresponds to at least two different modulation and coding schemes MCSs, and the RU is any one of a 26-tone RU, a 52-tone RU, a 106-tone RU, a 242-tone RU, a 484-tone RU, and a 996-tone RU.

2. The method according to claim 1, wherein the RU comprises at least two subcarrier groups, and two subcarrier groups in the at least two subcarrier groups respectively correspond to different MCSs.

3. The method according to claim 2, wherein all of the at least two subcarrier groups comprise a same number of data subcarriers.

4. The method according to claim 2, wherein the at least two subcarrier groups comprise a first subcarrier group and a second subcarrier group, and a number of data subcarriers comprised in the first subcarrier group is different from a number of data subcarriers comprised in the second subcarrier group.

5. The method according to any one of claims 1 to 4, wherein the RU belongs to a multi-resource unit MRU.

6. The method according to any one of claims 1 to 4, wherein
the RU is a 996-tone RU, and the RU belongs to a 2×996-tone RU; or
the RU is a 996-tone RU, and the RU belongs to a 4×996-tone RU.

7. The method according to any one of claims 1 to 6, wherein the method further comprises:
sending indication information, wherein the indication information indicates the at least two different MCSs.

8. The method according to claim 7, wherein the indication information further indicates a correspondence between the at least two subcarrier groups and the at least two different MCSs.

9. The method according to claim 8, wherein the at least two subcarrier groups comprise the first subcarrier group and the second subcarrier group, the at least two different MCSs comprise a first MCS and a second MCS, the indication information comprises a first field and a second field, and the first field indicates the first MCS and the second MCS; and
when a value of the second field is a first value, the first subcarrier group corresponds to the first MCS, and the second subcarrier group corresponds to the second MCS; or
when a value of the second field is a second value, the first subcarrier group corresponds to the second MCS, and the second subcarrier group corresponds to the first MCS, wherein
the first value is different from the second value.

10. A communication method, comprising:
receiving first data on an RU, wherein the RU corresponds to at least two different MCSs, and the RU is any one of a 26-tone RU, a 52-tone RU, a 106-tone RU, a 242-tone RU, a 484-tone RU, and a 996-tone RU; and
processing the first data.

11. The method according to claim 10, wherein the RU comprises at least two subcarrier groups, and two subcarrier groups in the at least two subcarrier groups respectively correspond to different MCSs.

12. The method according to claim 11, wherein all of the at least two subcarrier groups comprise a same number of data subcarriers.

13. The method according to claim 12, wherein the at least two subcarrier groups comprise a first subcarrier group and a second subcarrier group, and a number of data subcarriers comprised in the first subcarrier group is different from a number of data subcarriers comprised in the second subcarrier group.

14. The method according to any one of claims 10 to 13, wherein the RU belongs to a multi-resource unit MRU.

15. The method according to any one of claims 10 to 13, wherein
the RU is a 996-tone RU, and the RU belongs to a 2×996-tone RU; or
the RU is a 996-tone RU, and the RU belongs to a 4×996-tone RU.

16. The method according to any one of claims 10 to 15, wherein the method further comprises:
receiving indication information, wherein the indication information indicates the at least two different MCSs.

17. The method according to claim 16, wherein the indication information further indicates a correspondence between the at least two subcarrier groups and the at least two different MCSs.

18. The method according to claim 17, wherein the at least two subcarrier groups comprise the first subcarrier group and the second subcarrier group, the at least two different MCSs comprise a first MCS and a second MCS, the indication information comprises a first field and a second field, and the first field indicates the first MCS and the second MCS; and
when a value of the second field is a first value, the first subcarrier group corresponds to the first MCS, and the second subcarrier group corresponds to the second MCS; or
when a value of the second field is a second value, the first subcarrier group corresponds to the second MCS, and the second subcarrier group corresponds to the first MCS, wherein
the first value is different from the second value.

19. A communication apparatus, comprising a processor, wherein the processor is configured to: by executing a computer program or instructions or through a logic circuit,
enable the communication apparatus to perform the method according to any one of claims 1 to 9, or
enable the communication apparatus to perform the method according to any one of claims 10 to 18.

20. The communication apparatus according to claim 19, wherein the communication apparatus further comprises a memory, and the memory is configured to store the computer program or the instructions.

21. The communication apparatus according to claim 19 or 20, wherein the communication apparatus further comprises a communication interface, and the communication interface is configured to: input and/or output a signal.

22. A communication apparatus, comprising a logic circuit and an input/output interface, wherein the input/output interface is configured to: input and/or output a signal; and
the logic circuit is configured to perform the method according to any one of claims 1 to 9; or
the logic circuit is configured to perform the method according to any one of claims 10 to 18.

23. A computer-readable storage medium, wherein the computer-readable storage medium stores a computer program or instructions; and when the computer program or the instructions are run on a computer,
the method according to any one of claims 1 to 9 is performed, or
the method according to any one of claims 10 to 18 is performed.

24. A computer program product, comprising instructions, wherein when the instructions are run on a computer,
the method according to any one of claims 1 to 9 is performed, or
the method according to any one of claims 10 to 18 is performed.
